# EUROPÄISCHE PATENTSCHRIFT

(11) **EP 1 254 723 B1**
(45) Veröffentlichungstag und Bekanntmachung des Hinweises auf die Patenterteilung: **04.06.2003**
(21) Anmeldenummer: 01109995.9
(22) Anmeldetag: 25.04.2001
(51) Int. Cl.: B05B 15/06, A01M 7/00

(54) **Spritzeinrichtung zum Versprühen von Flüssigkeiten, insbesondere für landwirtschaftliche Zwecke**
Spray apparatus for fluids, particularly for agricultural use
Appareil de pulvérisation, notamment pour l'agriculture

(43) Veröffentlichungstag der Anmeldung: 06.11.2002
(73) Patentinhaber: Lechler GmbH, 72555 Metzingen (DE); Altek GmbH, 72108 Rottenburg-Hailfingen (DE)
(72) Erfinder: Göbel, Bernd, Dr., 71686 Remseck (DE); Müller, Norbert, 72116 Mössingen-Belsen (DE)
(74) Vertreter: Patentanwälte Ruff, Wilhelm, Beier, Dauster & Partner

(56) Entgegenhaltungen:
- FR-A- 2 616 084
- US-A- 3 863 841
- US-A- 4 456 180
- US-A- 5 125 578
- US-A- 6 053 427
- US-A- 6 126 088

## Beschreibung

Die Erfindung betrifft eine Spritzeinrichtung zum Versprühen von Flüssigkeiten, insbesondere für landwirtschaftliche Zwecke mit einer einem Fahrzeug zuzuordnenden Spritzbalkenanordnung mit einer quer zur Fahrtrichtung verlaufenden Flüssigkeitszuführleitung, die in Abständen mit Anschlussstutzen für Spritzdüsen versehen ist, die jeweils einzeln über pneumatisch oder elektrisch ansteuerbare Ventile an- und abschaltbar sind, wobei die Anschlussstücke jeweils als T-Stücke mit einem quer zur Achse des Anschlussstutzens verlaufenden Verteilerkanal und mit an dessen beiden Enden vorgesehenen Anschlussmöglichkeiten für die Spritzdüsen ausgebildet sind.

Eine Spritzeinrichtung dieser Art ist aus der GB 2 322 573 A bekannt. Dort hat man jeweils drei in einer Reihe und in Fahrtrichtung angeordnete Spritzdüsen mit Ventilen an einem gemeinsamen Anschlussstutzen der Flüssigkeitszuführleitung vorgesehen, um durch Zuschalten oder Abschalten einer oder zwei Spritzdüsen die Ausbringmenge variieren zu können. Dies ist auch noch dadurch begünstigt, dass die drei in einer Reihe angeordneten Spritzdüsen jeweils für sich ebenfalls eine unterschiedliche Ausbringmenge bei gleichem Versorgungsdruck aufweisen können. Um eine gegenseitige Überdeckung der Spritzstrahlen der in Fahrtrichtung hintereinander angeordneten Spritzdüsen zu vermeiden, sind dort die Spritzdüsen als Flachstrahldüsen ausgebildet, deren Spritzfächer unter einem gewissen Winkel zur Längsrichtung des Spritzbalkens geneigt ist. Die Montage solcher fest verschraubten Spritzdüsen ist wegen der großen Anzahl der notwendigen Spritzdüsen relativ aufwendig.

Aus der WO 98/18560 ist ebenfalls eine für landwirtschaftliche Zwecke einzusetzende Spritzdüsenanordnung bekannt, bei der man die im Abstand zueinander an der Flüssigkeitszufuhrleitung angebrachten Spritzdüsen jeweils über Magnetventile steuert. Eine Änderung der Ausbringmenge ist nur durch Abschalten einzelner Ventile möglich, wobei dann das Problem auftreten kann, dass örtlich Zonen entstehen, die nicht gleichmäßig mit dem auszutragenden Spritzmittel belegt werden.

Der vorliegenden Erfindung liegt die Aufgabe zugrunde, eine Spritzeinrichtung der eingangs genannten Art so auszubilden, dass eine einfachere Montage möglich wird, dennoch aber die Variationsmöglichkeiten zur Bestimmung der Ausbringmenge noch verbessert werden.

Zur Lösung dieser Aufgabe besteht die Erfindung darin, dass die Spritzdüsen jeweils mindestens als Doppelspritzdüsen-Einheiten mit einer gemeinsamen Verteilerbohrung und zwei an dieser angeschlossenen senkrecht zueinander stehenden Anschlussmuffen ausgebildet sind.

Diese Ausgestaltung ermöglicht es in einfacher Weise Doppelspritzdüsen-Einheiten jeweils am Verteilerkanal der Anschlussstücke so anzuordnen, dass sie vor oder hinter der Flüssigkeitszuführleitung zu liegen kommen und zwar je nach Wahl der an ihrer Verteilerbohrung vorgesehenen Anschlussmuffen in der Fahrtrichtung in einer Reihe hintereinander, oder quer zur Fahrtrichtung nebeneinander, wobei natürlich auch die Kombination möglich ist, vor der Flüssigkeitsleitung ein Doppelspritzdüsenventil mit seinen einzelnen Spritzdüsen in der Fahrtrichtung und hinter der Flüssigkeitsleitung quer zur Fahrtrichtung anzuordnen oder umgekehrt. Diese Ausgestaltung ergibt daher außer einer einfachen Anschlussmöglichkeit den Vorteil, dass viele Spritzdüseneinheiten in verschiedener Anordnung an der Spritzeinrichtung angeordnet werden können, wobei natürlich auch dann die vor oder hinter der Flüssigkeitszuführleitung liegenden Spritzdüsen so ausgelegt werden können, das sie eine unterschiedliche Ausbringmenge haben. Da alle Spritzdüsen über entsprechende Ventile - vorzugsweise pneumatisch - für sich ansteuerbar sind, lässt sich in einfacher Weise auch die Gesamtausbringmenge an die jeweiligen Erfordernisse anpassen, wobei die Vielzahl der vorzusehenden Spritzdüsen-Einheiten die Auswahlmöglichkeiten begünstigt.

In Weiterbildung der Erfindung können die Anschlussstücke jeweils mit einer Klemmeinrichtung zur Befestigung an der Flüssigkeitszuführleitung versehen sein. Sie lassen sich auf diese Weise einfach anbringen, so dass dann, wenn die Anschlüsse der Doppelspritzdüsen-Einheiten an den Verteilerkanal in an sich bekannter Weise als Steckanschlüsse ausgebildet sind, die Montage der Spritzeinrichtung relativ einfach wird.

In Weiterbildung der Erfindung kann dabei eine der Anschlussmuffen, die an der gemeinsamen Verteilerbohrung der Doppelspritzdüsen-Einheit vorgesehen sind, mittig zwischen den beiden Achsen der beiden Spritzventilkörper und die andere an einem freien Ende der Verteilerbohrung angeordnet sein, so dass, wie vorher schon ausgeführt, die Doppelspritzdüsen-Einheiten mit ihren Spritzdüsenkörpern parallel zur Fahrtrichtung oder senkrecht dazu ausrichtbar sind, ohne dass besondere Vorkehrungen zu ihrer Montage notwendig wären.

In Weiterbildung der Erfindung kann vorgesehen werden, dass der Verteilerkanal der Anschlussstücke in einem getrennten Anschlusskörper vorgesehen ist, der mit einem mittigen Verbindungsstutzen an dem Anschlussstutzen ansetzbar ist. Diese Ausgestaltung ermöglicht es dann, den Verbindungsstutzen schwenkbar am Anschlussstutzen anzuordnen, vorzugsweise um 90°, so dass auf diese Weise nicht nur eine Anordnung der Doppeldüsenspritz-Einheiten vor und hinter der Flüssigkeitszuführleitung, sondern auch eine Anordnung unterhalb derselben möglich wird, dann nämlich, wenn der Verteilerkanal, der vom Anschlussstutzen zu den beiden Doppelspritzventilkörpern führt, parallel zur Flüssigkeitszuführleitung und unterhalb derselben liegt. Natürlich muss in diesem Fall darauf geachtet werden, dass die am Verteilerkanal angeschlossenen Ventil- und Spritzdüsen-Einheiten mit ihrem Schwenkbereich auch unterhalb der Flüssigkeitszuführleitung liegen. Dies ist jedoch in einfacher Weise durch die entsprechende Länge des Anschlussstutzens erreichbar.

In Weiterbildung der Erfindung kann der Verbindungsstutzen und das Gegenstück des Anschlussstutzens jeweils als Steckverbinder mit zwei um 90° versetzten Raststellungen ausgebildet sein. Diese Ausgestaltung ermöglicht eine sehr einfache und schnelle Montage und erlaubt auch bei Bedarf ein schnelles Auswechseln von einzelnen Spritzdüsen-Einheiten.

Die Ventile der Spritzdüsen können mit gegen Federdruck wirkenden pneumatisch betätigbaren Rollmembran- oder auch mit Kolbendichtungs-Schaltkörpern versehen sein.

In Weiterbildung der Erfindung können dabei die Ventilteller mit einer umlaufenden, auf einem elastischen Dichtring aufsitzenden Dichtschneide versehen sein, die in einfacher Weise eine besondere Dichtheit des Ventils und damit auch ein unerwünschtes Nachtropfen der Spritzeinrichtung verhindert. Die Spritzdüsenkörper schließlich können in an sich bekannter Weise mit Hilfe von Überwurfmuttern angebracht werden, wobei die Ventilkörper mit Anschlussgewinden zu versehen sind. Auch eine Anordnung über Bajonett-Verschlüsse ist bei entsprechender Ausbildung möglich.

Die Erfindung ist anhand von Ausführungsbeispielen in der Zeichnung dargestellt und wird im folgenden erläutert. Es zeigen:
- Fig. 1: eine schematische perspektivische Darstellung einer Spritzeinrichtung nach der Erfindung, deren Spritzbalken an einem von einem Schlepper gezogenen Anhänger mit Tank angebracht ist,
- Fig. 2: die vergrößerte Darstellung eines Schnittes durch eines der Anschlussstücke des Spritzbalkens nach Fig. 1,
- Fig. 3: den Schnitt durch die Doppelspritzdüse der Fig. 2 in Richtung der Schnittlinie III,
- Fig. 4: einen vergrößerten Teil einer Draufsicht auf die Flüssigkeitszuführleitung mit daran angeordneten Doppelspritzdüsen-Einheiten in einer ersten Ausführungsform,
- Fig. 5: eine Draufsicht ähnlich Fig. 4 auf die Flüssigkeitszuführleitung in Fig. 1 in einer zweiten Variante,
- Fig. 6: die Darstellung des Anschluß-T-Stückes der Fig. 2,
- Fig. 7: die Draufsicht auf das Anschluß-T-Stück der Fig. 6,
- Fig. 8: eine Darstellung ähnlich Fig. 2, jedoch mit einer pneumatisch über eine Rollmembran steuerbaren Ventileinheit,
- Fig. 9: eine Darstellung ähnlich Fig. 6, jedoch bei einer Ausführungsform, bei der Anschlussstück und Verteilerkanal als getrennte Bauteile ausgebildet sind, die auch eine Verdrehung gegeneinander ermöglichen, und
- Fig. 10: eine Draufsicht ähnlich den Fig. 4 und 5, jedoch mit Varianten hinsichtlich der Anordnung der Doppelspritzdüsen-Einheiten vor und hinter der Flüssigkeitsleitung und mit zwei unterhalb der Flüssigkeitszuführleitung angeordneten Doppelspritzdüsen-Einheiten, die über ein Anschlussstück nach Fig. 9 angebracht sind.

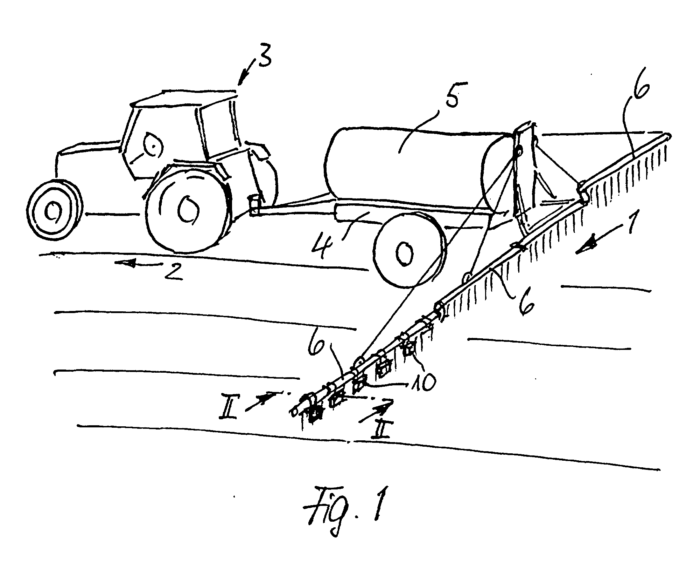

Fig. 1 zeigt eine erfindungsgemäße Spritzeinrichtung 1 im Einsatz. Beim gezeigten Ausführungsbeispiel besteht die Spritzeinrichtung 1 aus einem nicht näher gezeigten Spritzbalken, der quer zur Fahrtrichtung 2 eines Traktors 3 an einem mit dem Traktor 3 verbundenen Anhänger 4 (auch Anhängerspitze genannt) angebracht ist, auf dem auch ein Tank 5 für die auszutragende Spritzflüssigkeit angebracht ist. Die Spritzeinrichtung besteht aus mehreren Abschnitten eines Flüssigkeitszufuhrrohres 6, das mit Hilfe des nicht gezeigten Spritzbalkens am hinteren Ende des Anhängers 4 gehalten ist, wobei die einzelnen Abschnitte mit zugeordneten Spritzbalkenabschnitten in an sich bekannter Weise einklappbar ausgebildet sind, um die Fahrzeugbreite beim Transport auf einer Straße verringern zu können.

Jeder Abschnitt der Flüssigkeitszufuhrleitung 6, die in nicht näher gezeigter Weise über eine Pumpe mit der im Tank 5 enthaltenen Spritzflüssigkeit versorgt wird, ist mit mehreren, im Abstand zueinander angeordneten Anschlussstutzen für Ventilkörper 10 versehen, denen jeweils zwei oder auch mehr Spritzdüsen zugeordnet sind, wie im einzelnen noch beschrieben wird.

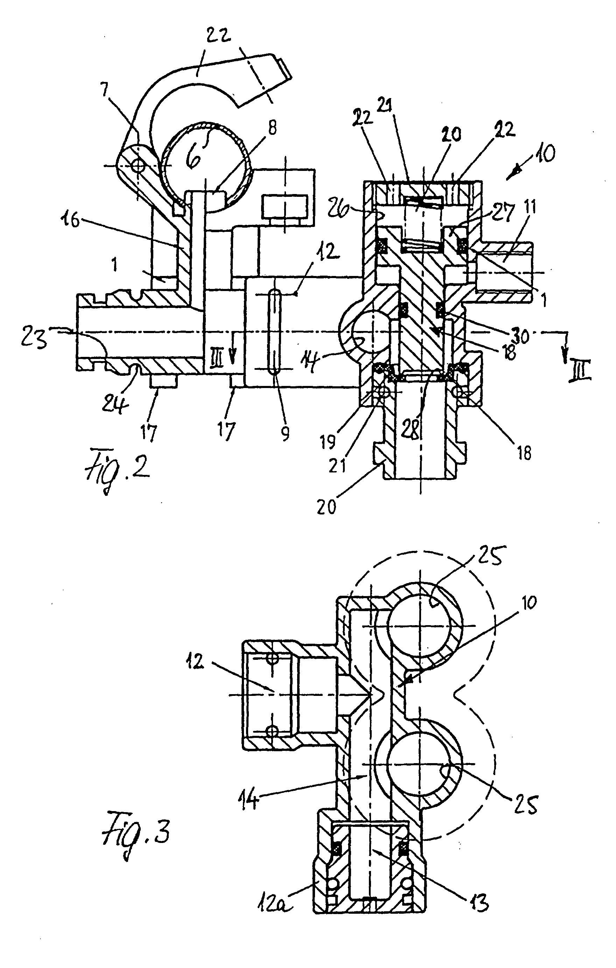

Die Fig. 2 zeigt, dass an der Flüssigkeitszuführleitung 6 jeweils mittels einer Klemmverbindung 7, die einen schwenkbaren Klemmbügel 22 aufweist, die Anschlussstutzen 16 über einen Nippel 8 an entsprechende Öffnungen in der Flüssigkeitszuführleitung 6 angeschlossen sind. Diese Nippel 8 sind beidseitig geschlitzt, um eine vollständige Entwässerung der Flüssigkeitszuführleitung 6 sicherzustellen.

Jeder Anschlussstutzen 16 ist mit einem quer zu seiner Achse verlaufenden Verteilerkanal 23 versehen, der an beiden Enden offen ist und jeweils Anschlussmöglichkeiten zum Aufstecken einer Anschlusstülle 12 des Ventilkörpers 10 aufweist, die dann über einen Stecker 9, der in die Nut 24 eingreift, fest an dem Verteilerkanal 23 angebracht werden kann. Um eine Verdrehung der Anschlusstülle 12 zu vermeiden, sind jeweils Positionierhilfen und Verdrehsicherungen in Form kleiner Vorsprünge 17 am Verteilerkanal 23 angeordnet.

Der Ventilkörper 10 ist als Doppelventilkörper mit zwei Ventilkörperbohrungen 25 mit jeweils einem Ventilstößel 18 ausgerüstet, wobei die Bohrung 25 nach oben in eine Bohrung 26 größeren Durchmessers übergeht, wo ein kolbenförmiger Ansatz 27 des Ventilstößels 18 mit einer Schaltfeder 20, die als Druckfeder wirkt, beaufschlagt ist. Die Bohrung 26 wird oben durch einen Verschlussstopfen 21 abgeschlossen, der mit Entlüftungsbohrungen 22 versehen ist. In den Raum unterhalb des Kolbens 27 mündet ein Anschluß 11 für die vorher erwähnte pneumatische Steuerleitung. Bei Druckbeaufschlagung wird der Ventilstößel 18 daher angehoben und hebt seine ringförmige Schneide 28 von der ringförmigen Ventilkante 18 eines elastischen Ringes ab, der stufenförmig mit einem Absatz 19 zwischen dem Ventilkörper 10 und einer unten in den Ventilkörper 10 eingesetzten Düsenaufnahme mit Bajonettkappe eingesetzt ist. Auch diese Düsenaufnahme 20 ist über einen Stecker 21 in ihrer Lage am Ventilkörper 10 gesichert, der baugleich mit dem Stecker 9 ist, der vorher erwähnt wurde.

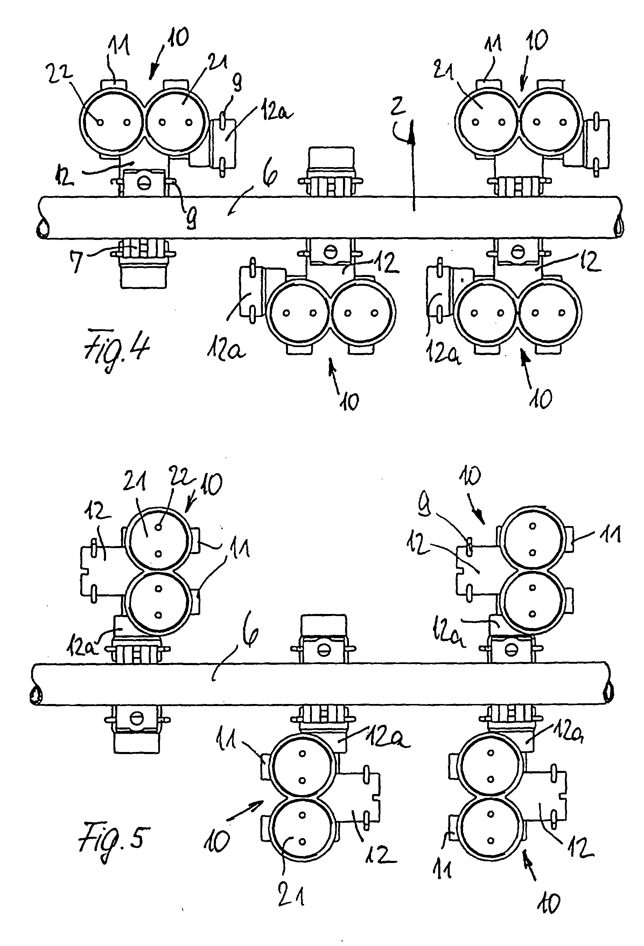

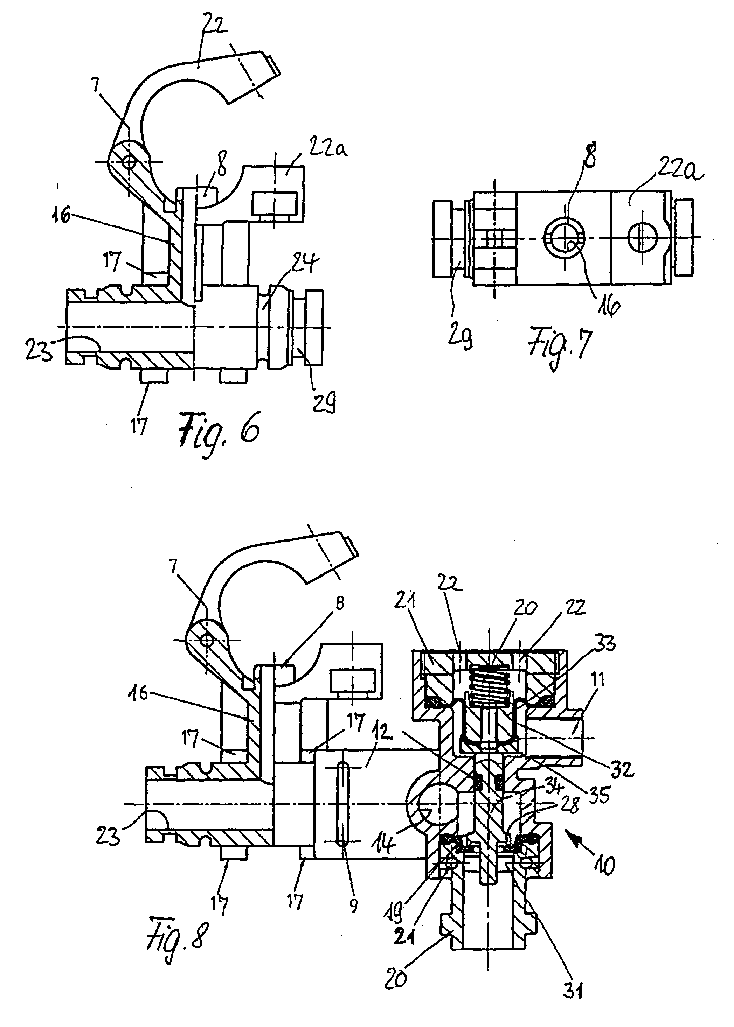

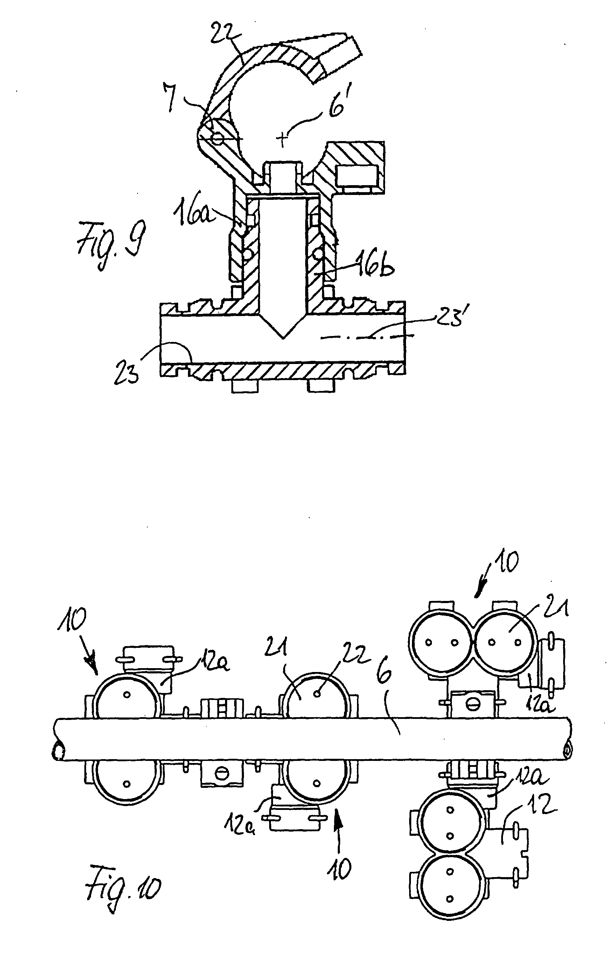

Der Düsenkörper 10 besitzt außerdem eine für beide Ventilbohrungen 25 gemeinsame Verteilerbohrung 14, die in Verbindung steht mit dem Dichtsitz zwischen Schneide 28 und Dichtring 18. Die Verteilerbohrung 14 ist mit zwei Anschlussöffnungen versehen, wobei die eine Anschlussöffnung eine Stecktülle 12a und die andere die vorher schon erwähnte Anschlusstülle 12 besitzt. Die Anschlusstülle 12a liegt koaxial zur Achse der gemeinsamen Verbindungsbohrung 14. Die Achse der Verbindungstülle 12 dagegen verläuft senkrecht zu der Achse der Verbindungsbohrung 14 und liegt in der Mitte zwischen den Ventilkörperbohrungen 25. Beim dargestellten Ausführungsbeispiel ist die Anschlusstülle 12a durch einen Blindstopfen 13 verschlossen, der die gleichen Außenabmessungen wie die Enden des Verteilerkanals 23 aufweist und deshalb in gleicher Weise in die Anschlusstülle 12a eingesetzt wird, in der auch der Anschluß der Verbindungstülle 12 am Verteilerkanal 23 erfolgt. Festzuhalten ist, dass aufgrund dieser Ausgestaltung der Anschluß des Ventilkörpers 10 mit seiner Verbindungsbohrung 14 auch über die Anschlusstülle 12a an dem Verteilerkanal 23 erfolgen könnte, was dann zu einer Anbauversion führt, wie sie in Fig. 5 gezeigt ist. Die Anbauvariante nach Fig. 2, d.h. also der Anschluß des Ventilkörpers 10 mit seiner Anschlusstülle 12 am Verteilerkanal 23 führt zu einer Ausführungsform, wie sie in Fig. 4 dargestellt ist.

Die Fig. 4 läßt erkennen, dass die hier gezeigten vier Doppelspritzdüsen-Ventilkörper 10 jeweils mit ihren Anschlusstüllen 12 an den Verteilerkanal 23 angeschlossen sind, so dass die beiden Bohrungen 25 mit den dazu gehörigen Ventilen und entsprechenden Spritzdüsen in der Fahrtrichtung 2 vor der Flüssigkeitszuführleitung 6 liegen und zwar jeweils im gleichen Abstand zu jener. Die Anschlusstülle 12a ist dabei, wie in Fig. 3 gezeigt, mit einem Blindstopfen verschlossen.

In der Fig. 5 dagegen sind nun die Doppelspritzdüsen-Ventilkörper 10 jeweils mit ihrer Anschlusstülle 12a mit dem Verteilerkanal 23 verbunden und die Anschlusstülle 12 ist durch einen Blindstopfen verschlossen. Diese Ventile sind daher mit ihren Ventilbohrungen 25 in einer Reihe und in der Fahrtrichtung 2 ausgerichtet. Sie können, wie Fig. 5 zeigt, entweder vor oder hinter der Flüssigkeitszuführleitung 6 oder auch an beiden Seiten dieser Flüssigkeitszuführleitung angeordnet werden, was natürlich auch für die Variante der Fig. 4 gilt. Durch diese Anbaumöglichkeiten ergeben sich bei einfachster Anschlussmöglichkeit unterschiedliche bauliche Ausgestaltungsmöglichkeiten für die Anordnung der Spritzdüsen. Natürlich ist es auch möglich, jeweils Spritzdüsen mit unterschiedlicher Ausbringmenge auf diese Weise anzuordnen, wenn dies gewünscht sein sollte. Auch bei der gezeigten Anordnung und bei Auslegung aller Spritzdüsen für die gleiche Ausbringmenge, jedoch mit unterschiedlichen Spritzcharakteristiken (z.B. Tropfengröße) lassen sich jedoch, zumindest mit der Anordnung nach Fig. 4 oder 5 ganz rechts, verschiedene Spritzmengen mit ein und derselben Anordnung ausbringen, indem über die zugeordneten Druckluftanschlüsse 11 entweder nur eine dieser Spritzdüsen, zwei, drei oder auch vier Düsen eingeschaltet werden. Bei Düsen für unterschiedliche Ausbringmengen lässt sich ein noch breiteres Mengenspektrum ausbringen, wenn diese Düsen einzeln oder in beliebiger Kombination betrieben werden.

Die Fig. 6 und 7 zeigen noch einmal als Einzelteil die Ausgestaltung des Anschlussstutzens 16, seiner Befestigungsmöglichkeit und die Ausgestaltung der Enden des Verteilerkanals 23, die zum Aufstecken der Anschlusstüllen 12 bzw. 12a ausnützbar sind. Es läßt sich hier sehr deutlich erkennen, dass die beiden offenen Enden des Verteilerkanals 23 außen mit der vorher erwähnten Nut 24 zum Sichern der Tülle mit Hilfe des Steckers 9 und mit einer weiteren Nut 29 zur Aufnahme eines nicht näher gezeigten Dichtringes versehen sind. Der Klemmbügel 22, der in Fig.7 nicht gezeigt ist, lässt sich in bekannter Weise im zugeklappten Zustand mit seinem Gegenstück 22a fest verbinden.

Die Fig. 8 zeigt eine Variante insofern, als hier im Ventilkörper 10 Ventile zur Steuerung der nicht gezeigten Spritzdüseneinsätze vorgesehen sind, die mit einer Rollmembran 32 ausgestattet sind. In diesem Fall ist ein Ventilstößel 34 vorgesehen, der am oberen Ende einen Gewindefortsatz aufweist, auf den ein Halteteller 35 für die Rollmembran 32 und ein Einsatz 33 für diese Rollmembran aufgeschraubt ist. Der Einsatz 33 wiederum steht unter der Einwirkung der Druckfeder 20, die, wie beim Ausführungsbeispiel nach Fig. 2, über den Deckel 21 am Ventilkörper 10 gehalten ist. Der Ventilstößel 34 besitzt unten einen Fortsatz, der innerhalb einer sternförmigen Führung 31 gehalten ist. Zur Minimierung der Reibung und zum Schutz gegen Verstopfen ist die Führung an den Stegen nur linienförmig ausgebildet. Die übrige Ausgestaltung des Ventilkörpers 10 entspricht jener der Fig. 2. Auch solche mit einer Rollmembran ausgerüstete Ventile lassen sich vorteilhaft einsetzen.

Fig. 9 zeigt nun eine sehr vorteilhafte Variante des Anschlussstutzens für den Verteilkanal 23. Der Anschlussstutzen besteht hier aus zwei Teilen, nämlich zum einen aus dem fest mit der Klemmbügelanordnung 7, 22 verbundenen ersten hülsenförmigen Teil 16a und zum anderen aus dem in diesem hülsenförmigen Teil gehaltenen Stutzenteil 16b, der wiederum einteilig mit dem quer verlaufenden Verteilkanal 23 ausgebildet ist.

Der Anschlussstutzenteil 16b kann so ausgebildet sein, dass er zumindest in zwei um 90° zueinander versetzten Stellungen innerhalb des hülsenförmigen Anschlussteiles 16a gehalten werden kann. Der Verteilkanal 23 läßt sich daher aus der in der Fig. 9 gezeigten Stellung, in der seine Achse 23' senkrecht zu der Achse 6' der Flüssigkeitszufuhrleitung verläuft, in eine Stellung verschwenken, in der die Achse 23' parallel zur Achse 6' verläuft. Diese Ausgestaltung des Anschlussstutzens 16a, 16b kann dazu ausgenutzt werden, um die in Fig. 10 dargestellte alternative Anordnung von Doppelspritzdüsenventilkörpern an der Leitung 6 zu erreichen. Voraussetzung dafür ist allerdings, dass der Abstand zwischen den Achsen 6' und 23' groß genug gewählt ist, um die Ventilkörper 10 unterhalb die Flüssigkeitszuführleitung 6 zu verschwenken, was bei den Ausführungsformen der Fig. 2 und 8 nicht möglich ist. Erreichen lässt sich dies aber in einfacher Weise durch entsprechende Verlängerung des Anschlussstutzens 16a, 16b in der in Fig. 9 gezeigten Ausführung. Die Ventilkörper 10 lassen sich auf diese Weise, sofern sie mit ihrer Anschlusstülle 12 am Verteilkanal 23 angeschlossen sind, entweder in die in Fig. 10 rechts oben gezeigte Stellung, ähnlich wie in Fig. 4, verschwenken oder, wenn die Achsen 6' der Flüssigkeitszufuhrleitung und 23' des Verteilkanals 23 parallel zueinander verlaufen, in die links in Fig. 10 gezeigte Stellung unterhalb der Flüssigkeitszufuhrleitung 6. Es ergeben sich dadurch vorteilhafte Variationsmöglichkeiten bei der Anordnung von Spritzventilen, die sich ohne baulichen Zusatzaufwand in einfacher Weise verwirklichen lassen. Diese Variante kann vorteilhaft auch eingesetzt, um eine gegenseitige Überschneidung von Spritzstrahlen zu vermeiden.

Möglich ist es natürlich auch, anstelle der beschriebenen Doppelspritzdüsenventile Drei- oder Mehrfachspritzdüsenventile vorzusehen, bei denen nicht nur zwei Spritzdüsenventile einer Einheit zugeordnet sind, sondern mehrere. Die Variationsmöglichkeiten können so noch erweitert werden.

## Patentansprüche

1. Spritzeinrichtung zum Ausbringen von Flüssigkeiten, insbesondere für landwirtschaftliche Zwecke, mit einer einem Fahrzeug (3) zuzuordnenden Spritzbalkenanordnung (1) mit einer quer zur Fahrtrichtung (2) verlaufenden Flüssigkeitszufuhrleitung (6), die in Abständen mit Anschlussstutzen (16) für Spritzdüsen versehen ist, die jeweils einzeln über pneumatisch oder elektrisch ansteuerbare Ventile an- und abschaltbar sind, wobei die Anschlussstücke jeweils als T-Stücke mit einem quer zur Achse des Anschlussstutzens (16) verlaufenden Verteilerkanal (23) und mit an dessen beiden Enden vorgesehenen Anschlussmöglichkeiten für die Spritzdüsen ausgebildet sind,
**dadurch gekennzeichnet, dass**
die Spritzdüsen jeweils mindestens als Doppelspritzdüseneinheiten (10) mit einer gemeinsamen Verteilerbohrung (14) mit zwei an dieser angeschlossenen senkrecht zueinander stehenden Anschlussmuffen (12, 12a) ausgebildet sind.

2. Spritzeinrichtung nach Anspruch 1, **dadurch gekennzeichnet, dass** die Anschlussstücke (16) jeweils mit einer Klemmeinrichtung (7, 22) zur Befestigung an der Flüssigkeitszufuhrleitung (6) versehen sind.

3. Spritzeinrichtung nach Anspruch 1, **dadurch gekennzeichnet, dass** eine der Anschlussmuffen (12) mittig zwischen den Achsen der Spritzventilbohrungen (25) und die andere (12a) an einem freien Ende der Verteilerbohrung (14) angeordnet sind.

4. Spritzeinrichtung nach Anspruch 1, **dadurch gekennzeichnet, dass** der Verteilerkanal (23) in einem gesonderten Anschlusskörper vorgesehen ist, der mit einem mittigen Anschlussstutzen (16b) an einen hülsenförmigen Anschlussstutzen (16a) der Klemmeinrichtung (7, 22) ansetzbar ist.

5. Spritzeinrichtung nach Anspruch 4, **dadurch gekennzeichnet, dass** der Anschlussstutzen (16b) schwenkbar an der Anschlusshülse (16a) anbringbar ist.

6. Spritzeinrichtung nach Anspruch 5, **dadurch gekennzeichnet, dass** der Anschlussstutzen (16b) in zwei um 90° gegeneinander versetzten Positionen in der Anschlusshülse (16a) befestigbar ist.

7. Spritzeinrichtung nach Anspruch 6, **dadurch gekennzeichnet, dass** die beiden Anschlussteile (16a, 16b) über eine Rastverbindung ineinander gehalten sind.

8. Spritzeinrichtung nach Anspruch 1, **dadurch gekennzeichnet, dass** die Ventile der Spritzdüsen mit gegen den Druck einer Feder (20) wirkenden pneumatisch betätigbaren Rollmembran-(32) oder Kolbendichtungs-(27)Schaltkörpern versehen sind.

9. Spritzeinrichtung nach Anspruch 8, **dadurch gekennzeichnet, dass** die Ventilteller mit einer umlaufenden, auf einem elastischen Dichtring (18) aufsitzenden Dichtschneide (28) versehen sind.

10. Spritzeinrichtung nach Anspruch 8, **dadurch gekennzeichnet, dass** die Ventilkörper (10) mit Anschlussteilen in der Art eines Bajonettverschlusses (20) zum Befestigen der Düsenkörper versehen sind.

## Claims

1. Spray apparatus for the output of fluids, particularly for agricultural purposes, with a spray bar arrangement (1) associated with a vehicle (3), with a fluid-supply duct (6) which extends transversely relative to the direction of travel (2) and which is provided at intervals with connecting branches (16) for spray nozzles each of which can be turned on and off individually by means of valves that can be triggered pneumatically or electrically, wherein the connecting branches are formed as respective T-pieces with a distribution duct (23) extending transversely relative to the axis of the connecting branch (16), and with connection means, provided at the two ends of the distribution duct (23), for the spray nozzles, **characterized in that** the spray nozzles are each formed at least as double spray-nozzle units (10) with a common distribution bore (14) with two connection sleeves (12, 12a), arranged perpendicular to one another, connected to the common distribution bore (14).

2. Spray apparatus according to Claim 1, **characterized in that** the connecting branches (16) are provided with respective clamping devices (7, 22) for fixing on the fluid-supply duct (6).

3. Spray apparatus according to Claim 1, **characterized in that** one of the connection sleeves (12) is arranged centrally between the axes of the spray-valve bores (25) and the other (12a) is arranged at a free end of the distribution bore (14).

4. Spray apparatus according to Claim 1, **characterized in that** the distribution duct (23) is provided in a separate connection member which can be joined, with a central connecting branch (16b), to a bush-shaped connecting branch (16a) of the clamping device (7, 22).

5. Spray apparatus according to Claim 4, **characterized in that** the connecting branch (16b) can be mounted swivellably on the connecting bush (16a).

6. Spray apparatus according to Claim 5, **characterized in that** the connecting branch (16b) can be secured in the connecting bush (16a) in two positions offset relative to one another by 90°.

7. Spray apparatus according to Claim 6, **characterized in that** the two connection elements (16a, 16b) are held in one another by means of a snap connection.

8. Spray apparatus according to Claim 1, **characterized in that** the valves of the spray nozzles are provided with pneumatically-operable rolling-diaphragm (32) or piston-sealing (27) switching members acting against the pressure of a spring (20).

9. Spray apparatus according to Claim 8, **characterized in that** the valve plates are provided with a circumferential sealing bevel (28) resting on a resilient sealing ring (18).

10. Spray apparatus according to Claim 8, **characterized in that** the valve bodies (10) are provided with connection elements in the form of a bayonet fixing (20) for securing the nozzle bodies.

## Revendications

1. Pulvérisateur pour éjection de fluides ou de liquides, destiné en particulier à des usages agricoles, comprenant un système de pulvérisation à longeron (1) pour montage sur un véhicule (3) comportant une canalisation d'amenage (6) disposée transversalement à la direction de la course (2) du véhicule, qui est dotée de tubulures de raccordement (16) des buses disposées à intervalles, qui sont respectivement embrayées ou débrayées individuellement au moyen de valves à commande pneumatique ou électrique, où les éléments de raccordement sont chacun réalisés comme des raccordements à section en T comportant une conduite de distribution (23) agencée transversalement à l'axe de ladite tubulure de raccordement (16) et munie à ses deux extrémités de moyens de raccordement des buses,
**caractérisé en ce que**
les buses sont respectivement réalisées comme éléments ayant au moins deux buses (10) comportant un alésage du distributeur commun (14) doté de deux manchons (12, 12a) agencés perpendiculairement entre eux pour raccordement audit alésage du distributeur commun.

2. Pulvérisateur selon la revendication 1, **caractérisé en ce que** les éléments de raccordement (16) sont respectivement dotés d'un dispositif de serrage (7, 22) pour fixation à ladite canalisation d'amenage (6).

3. Pulvérisateur selon la revendication 1, **caractérisé en ce qu'**un des manchons de raccordement (12) est agencé au milieu entre les axes des alésages des valves de pulvérisation (25) et l'autre manchon (12a) est agencé à une extrémité libre de l'alésage du distributeur (14).

4. Pulvérisateur selon la revendication 1, **caractérisé en ce que** ladite conduite de distribution (23) est prévue dans un corps formant raccordement séparé qui s'attache à l'aide d'une tubulure de raccordement (16b) centrale à une tubulure de raccordement en forme de douille (16a) dudit dispositif de serrage (7, 22).

5. Pulvérisateur selon la revendication 4, **caractérisé en ce que** la tubulure de raccordement (16b) se monte de manière pivotante sur ladite douille de raccordement (16a).

6. Pulvérisateur selon la revendication 5, **caractérisé en ce que** la tubulure de raccordement (16b) se fixe à deux emplacements disposés respectivement à 90° l'un par rapport à l'autre de ladite douille de raccordement (16a).

7. Pulvérisateur selon la revendication 6, **caractérisé en ce que** les deux éléments de raccordement (16a, 16b) s'encliquent au moyen d'un assemblage à crans.

8. Pulvérisateur selon la revendication 1, **caractérisé en ce que** les valves des buses sont dotées d'actuateurs commandés pneumatiquement de type membrane circulaire (32) ou garniture de piston (27) pour résister à la pression d'un ressort (20).

9. Pulvérisateur selon la revendication 8, **caractérisé en ce que** les têtes de valves sont dotées d'un élément tranchant d'étanchéité (28) circulaire monté sur un anneau d'étanchéité (18) élastique.

10. Pulvérisateur selon la revendication 8, **caractérisé en ce que** les corps de valve (10) sont dotés d'éléments de raccordement du type joint à baïonnette (20) pour fixer les corps de buse.
